# EUROPEAN PATENT APPLICATION

(11) **EP 1 619 822 A1**
(43) Date of publication of application: **25.01.2006**
(21) Application number: 05106636.3
(22) Date of filing: 20.07.2005
(51) Int. Cl.: H04L 9/08, H04L 29/06

(54) **Delegation protocol**

(30) Priority: 23.07.2004 GB 0416479
(71) Applicant: Hewlett-Packard Development Company, L.P., Houston, TX 77070 (US)
(72) Inventor: DAS, Devaraj, Karnataka 56005, BANGALORE (IN)
(74) Representative: Lloyd, Richard Graham

(57) **Abstract**

A key-management method for delegating authority in a computer environment, suitable for essentially all UDP and TCP based applications. The method includes performing mutual authentication between a first computing entity and a plurality of other computing entities, and establishing pair-wise secure associations between the other entities.

## Description

### Field of the Present Invention

The present invention relates to a key-management protocol and a delegation method or protocol for providing secure delegation by a computing entity of authority in a computer environment, of particular but by no means exclusive application in delegating authority from one computer application to another.

### Background of the Present Invention

Delegation of authority is commonly desirable in a computer environment when a user accesses an application that in turn must access one or more other applications. This is complicated by the fact that each of these secondary applications may run on a separate computer and in a different administrative domain. In such situations, the secondary applications, which may be regarded as sub-applications (or components) of the principal application, may be required to communicate with each other in application specific ways. Two principal security issues arise when, for example, a sub-application wants to restrict authorization to other peer sub-applications.

The first security issue is that of secure data communication between the hosts, typically addressed in existing systems by encryption and the authentication of data communication.

The second security issue is that of ensuring that only authorized access to the application is permitted; authorized access to the application can in turn be resolved into authorized access to the components of the application. Access to resources is controlled by requiring that only the user can initiate the distributed application. That is, each of the application's components requires conclusive identification of the user on whose behalf it is being executed, and propagates that identification information to other components with which it communicates during the lifecycle of the application. Thus, the execution (and thereby the output) of the overall application is dependent on the user that initiated the application.

One existing trust delegation mechanism may be found in the network authentication protocol Kerberos, a protocol that uses secret-key cryptography to provide authentication for client/server applications. Further, proxy-based delegation is used in grid-computing environments (also referred to as Grid Security Infrastructure or GSI). These approaches target delegation at the application layer of the OS network stack and most of them target TCP-based applications.

In one particular existing approach, a HTTP client may seek to retrieve a file from a HTTP server that limits the availability of certain protected documents to only authorized entities. Communications between components are usually secured with SSL (Secure Sockets Layer); however, to gain access to the protected documents, the HTTP client presents suitable credentials to the HTTP server. In the straightforward case where the HTTP client is running on the user's computing device (such as where the client is a web browser), the user may be prompted for a username and password combination. However, if the HTTP client is embedded in another application invoked by the user (bearing in mind that the user may be on a different machine from that of the HTTP client), then the user must provide the client application with the required credentials. The client application uses these credentials to talk to the server application on behalf of the user. The user thus delegates this authority to the client application; this scenario could also be termed "Secure Collaboration", where the secure part of the collaboration is set up by the user.

However, it is not trivial for two distinct applications to establish an ad hoc collaboration. The two applications have to agree upon a common method of communicating the user's credentials that is secure. Although HTTP is a standard protocol, not all applications are HTTP-enabled. Other problems associated with the transfer of user credentials may arise, such as in establishing clearly whether these credentials should be transferred at the beginning of the data transfer or at the end of the data transfer.

### Summary

The invention provides a method and system for delegating authority in a computer environment.

In particular, according to an exemplary embodiment, there is provided a key-management method for delegating authority in a computer environment. The method includes performing mutual authentication between a first computing entity and a plurality of other computing entities, and establishing pair-wise secure associations between the other entities.

The mutual authentication is to provide secure channels between the first computing entity (e.g. a user computing device or simply "a user") and the other computing entities. The other computing entities are commonly processes running on host computers, but in some cases may equivalently be those host computers (or "hosts").

In one embodiment, the first computing entity is a user computing device (sometimes referred to simply as "a user"). However, when this embodiment is used in a multiuser environment, a corresponding plurality of sets of pair-wise secure associations may be established between the other computing entities, one set for each user computing device.

The mutual authentication - resulting in mutual trust between the first computing entity and the other computing entities - may be established by any suitable mechanism, including by means of certificates or shared-keys.

The other computing entities may not trust each other to the extent that they allow their services to be availed by each other, but once mutual authentication has been effected the other computing entities trust the first computing entity (typically a user computing device) and establish the secure associations on behalf of the user but between themselves; thus, the first computing entity is the common thread that runs across all the entities.

The method may include employing the IPSec protocol (IP security protocol) in performing the mutual authentication between the first computing entity and the other computing entities, in establishing the pair-wise secure associations between the other entities, or both.

The secure associations may comprise IPSec protocol Security Associations.

The IPSec protocol serves to secure the communication, at the IP layer, between hosts in the Internet. The IPSec protocol - as is discussed below - satisfies the authentication and encryption requirements of applications that run above, for example, TCP-based applications. The IPSec protocol is a robust authentication and privacy mechanism, as it works at the IP layer; any application can therefore take advantage of the IP layer Security Association (or "SA") with another entity. Hosts typically establish Security Associations, and packets are processed as per the attributes of the Security Associations so established. This embodiment exploits the fact that multiple Security Associations can be created between any two entities.

The two major attributes of an SA are the Security Parameter Index (SPI), and, the IPSec protocol (Authentication-Header or Encapsulated-Security-Payload). The SPI serves to distinguish SAs between two endpoints with the same addresses and the same IPSec protocol. The secure channel between any two hosts on behalf of a user is signified by SPIs (representing the user) on the respective hosts.

The secure association between any two of the other computing entities may be signified by a pair of SPIs that represent the first computing entity on the respective other computing entities. In such embodiments, each SPI represents the first computing entity in a respective other computing entity.

Thus, according to this embodiment, a first computing entity (typically a user) can establish secure associations between a set of other computing entities (typically hosts). These secure associations are exposed in a limited way to the applications running locally on the other computing entities or hosts; the applications (or components of a distributed application) can then collaborate securely to accomplish a given task, whether or not the client is offline at the time of the job processing.

### Brief Description of the Drawings

FIG. 1 is a schematic view of a computer network operable to perform delegation by means of a key-management protocol according to an exemplary embodiment.
FIG. 2 is a flow diagram of the key-management protocol of FIG. 1.
FIG. 3 is a further schematic view of the computer network of FIG. 1 but with a further host computer, illustrating the addition of the further host computer to the key-management protocol of FIG. 1.
FIG. 4 is a flow diagram of the addition of the further host computer of FIG. 3.
FIG. 5 is a schematic view of a data storage medium according to another embodiment.

Eᵢ stands for of the computing entity

### Detailed Description of Exemplary Embodiments

In the following description, the following terms are used with the following meanings:
- User: a user application or software;
- Eᵢ: the IPv4 address of a computing entity i, in a set of n computing entities;
- ALLOT n SPI: User requests Entityᵢ to allot n SPIs;
- SETUP SA: User requests Entityᵢ to setup SA with other entities in the set;
- SPIₖ^{j}: an SPI, allotted by Eⱼ for communication with entity Eₖ;
- grp-enc-key: Group encryption key used for communication between entities, and generated by the User;
- grp-digest-key: Group authentication key used for communication between entities, generated by the User;
- {x}y: x encrypted and authenticated (signed) with key y.

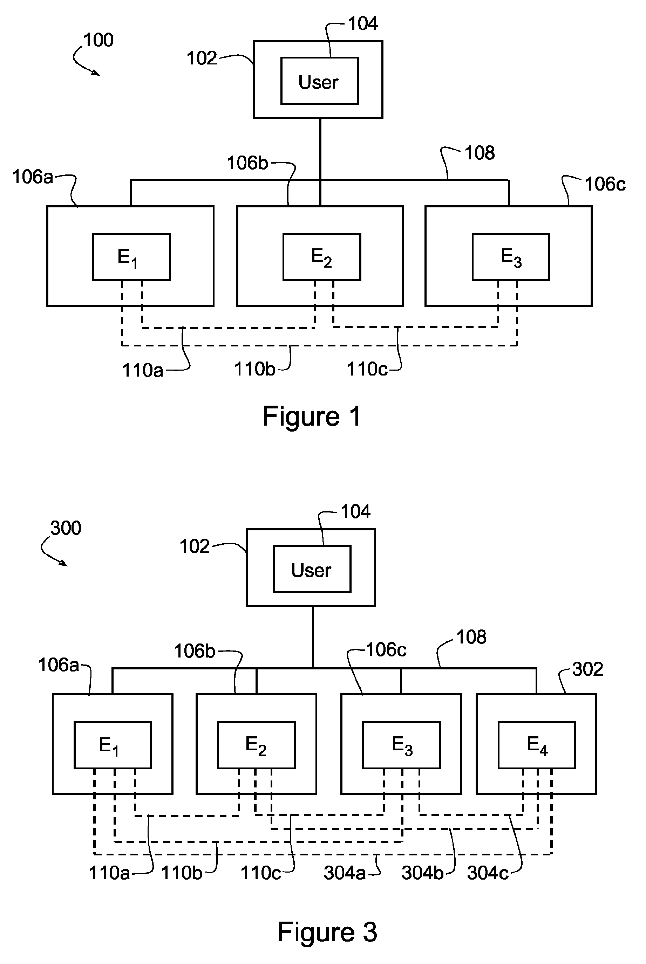

FIG. 1 is a schematic view of a computer network 100 configured to delegate authority by means of a key-management protocol according to an embodiment of the invention. The network 100 includes a first computer in the form of user computer 102, provided with and running a user application 104. The user computer 102 or user application 104 may equivalently be referred to as the "User", so in the following description the user application 104 is referred to as User 104.

The computer network 100 also includes host computers (or hosts) 106a, 106b, 106c, each loaded with and running a respective software entity E₁, E₂, E₃. The computer network 100 also includes an IP network 108. By means of IP network 108, User 104 can communicate with hosts 106a, 106b, 106c (and hence with software entities E₁, E₂, E₃), and hosts 106a, 106b, 106c (and hence software entities E₁, E₂, E₃) can communicate with each other.

In use, occasions will arise when User 104, in order to complete a task, must access software entities E₁, E₂, E₃.

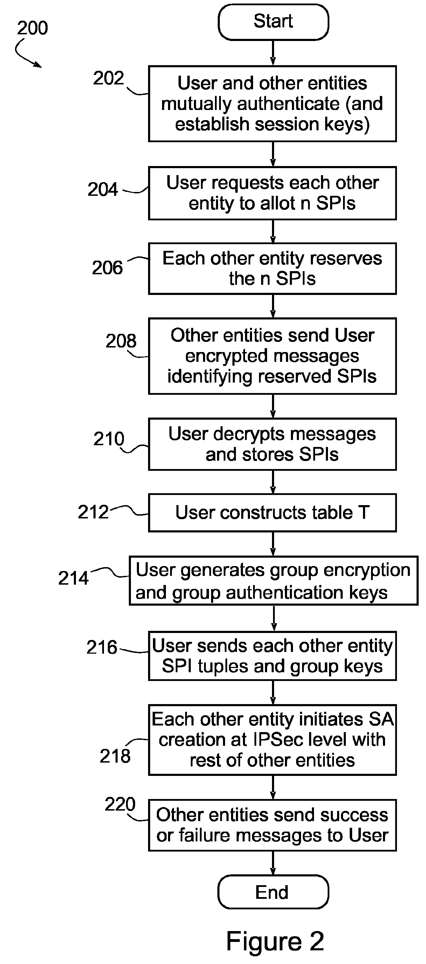

Thus, user computer 102 and hosts 106a, 106b, 106c are provided with software that implements the key-management protocol of this embodiment that leads to the creation of a user-aware secure association between the other entities. This key-management protocol is user-initiated and performed in two phases, as illustrated at 200 in the flow diagram of FIG. 2.

Referring to FIG. 2, in the first phase the User 104 initiates (at step 202) a mutual authentication protocol with each entity E₁, E₂, E₃ to establish mutual trust so that a secure channel between the User 104 and each other entity E₁, E₂, E₃ is established. This phase includes establishing shared session-keys SK_{User→Ei} in each case. It will be understood that the User 104 is taken to possess (from setup or otherwise) the identities of the set of entities E₁, E₂, E₃.

The first phase thus comprises "User → Eᵢ (i = 1,... ,n)*"*, that is, mutual authentication is performed between the User 104 and each other entity E₁, E₂, E₃ in turn. By the completion of the first phase, a secure communication channel will have been established between the User 104 and each other entity E₁, E₂, E₃. It will be understood that this result can alternatively be achieved by means of certificate based mutual authentication rather than with the shared session-keys SK_{User→Ei}.

The second phase has two sub-phases, the initiation sub-phase and the commit sub-phase. By the end of the second phase, pair-wise SAs will have been established between the other entities E₁, E₂, E₃. The other entities E₁, E₂, E₃ may not trust each other to the extent that they allow their services to be availed by any other entities, but they trust the User 104 and establish a secure channel on behalf of User 104 between themselves; the User 104 is the common thread that runs across all these entities.

It will also be appreciated that in some cases there may be more than one User. In such cases, a plurality of such channels will be established between the other entities E₁, E₂, E₃, one (comprising a set of pair-wise SAs) for each User.

Thus, the initiation sub-phase has two steps:
Step (1) "User → Eᵢ: {ALLOT n SPI, (E₁, E₂, ... Eᵢ₋₁, Eᵢ₊₁,... Eₙ) }SK_{User→Ei}*"*;
Step (2) "Eᵢ → User: {SPI₁ⁱ, SPI₂ⁱ,... SPIₙⁱ} SK_{User→Ei}*"*.

In Step (1), the User 104 sends a request (at step 204) to each entity Eᵢ (signed and encrypted by means of the session-key SK_{User→Ei} established in the first phase) that n SPIs be allotted.

Of these n SPIs, one (viz. SPIᵢⁱ) is for local interprocess communication (IPC) on behalf of the User 104.

The other (n - 1) SPIs are for establishing point-to-point secure connections with the other (n - 1) entities on behalf of the User 104. The IP addresses of the other (n - 1) entities (E₁, E₂,..., Eₙ) are sent in case an SPI has already been reserved (owing to a previous run of the protocol) by Eᵢ for the combination (Eₖ, User) with k ≠ i. If so, that SPI can be re-used without reserving a new SPI.

Thus, upon receiving request sent at step 204, each other entity Eᵢ reserves (at step 206) these SPIs and sends 208 an encrypted message back to the User 104 identifying the n SPIs so reserved. Each of these messages is encrypted by means of the session-key SK_{User→Ei} generated at step 202 in the first phase.

In Step (2) of the initiation sub-phase, the User 104 - at step 210 - decrypts these messages by means of the respective session-key SK_{User→Ei} and stores the SPIs; this is repeated for all i = 1,..., n.

The commit sub-phase of the second phase is represented by:
User → Eᵢ: {(SPIᵢ^{j}, SPIⱼⁱ Eⱼ), (SPIᵢ^{k}, SPIₖⁱ, Eₖ),...,
(SPIᵢⁿ, SPIₙⁱ, Eₙ), grp-enc-key, grp-digest-key}SK_{User→Ei}.

To do this, the User 104 firstly constructs (at step 212) a table T comprising a matrix Tᵢ^{j} of the SPIs SPIᵢ^{j}. (An exemplary instance of a table T is described below.)

The User 104 then generates at step 214 a strong group encryption key (grp-enc-key) and a strong group authentication key (grp-digest-key) (as is discussed in greater detail below). It should be appreciated that the keys are generally User specific and hence different for each User/entities group. For example, the entities E₁, E₂, and E₃ might be involved in secure collaboration on behalf of two Users and so would use different group keys in each case.

The first entry in the tuple (SPIᵢ^{t}, SPIₜⁱ, Eₜ) is the SPI that Eᵢ should use for communicating with Eₜ, whilst the second entry in the tuple is the SPI that Eₜ should use for communicating with Eᵢ. Both these SPIs are sent as part of the tuple so that the IPSec Security Association can be effected.

The User 104 thus sends (at step 216) to each entity Eᵢ a set of tuples of the form (SPIᵢ^{t}, SPIₜⁱ, Eₜ), t = 1,... n, drawn from the table T, and the group encryption and authentication keys, all encrypted by means of session-key SK_{User→Ei}.

Each entity Eᵢ, upon receiving the respective tuples, initiates (at step 218) Security Association creation at the IPSec level with the other entities, and then sends to the User 104 (at step 220) a message indicating whether it has been able to do so or not:
Ei -> User: Success or Failure

Thus, in this embodiment n = 3, that is, there are three other software entities (viz. E₁, E₂, E₃). When User 104 must access an application requiring collaboration between entities E₁, E₂, E₃, the two phases of the key-management protocol of this embodiment proceed as follows, initiated by the User 104.

In the first phase, mutual authentication is performed and session share-keys SK_{User→E1}, SK_{User→E2} and SK_{User→E3} are generated (cf. step 202 in FIG. 2):
User → E₁;
User → E₂; and
User → E₃.

Next, in the initiation sub-phase of the second phase, the User 104 sends to each other entity E₁, E₂, E₃ a signed and encrypted request to allot n = 3 SPIs (step 204):
User->E₁: {ALLOT 3 SPI, (E₂, E₃) } SK_{User→E1}
User->E₂: {ALLOT 3 SPI, (E₁, E₃) } SK_{User→E2}
User→E₃: {ALLOT 3 SPI, (E₁, E₂) } SK_{User→E3}.

Each of the other entities responds, at step 206, by reserving the n = 3 SPIs and then, at step 208, by sending the User 104 an encrypted message identifying the reserved SPIs:
E₁→User : {SPI₂¹, SPI₃¹ } SK_{User→E1}
E₂->User : {SPI₁², SPI₃² } SK_{User→E2}
E₃->User : {SPI₁³, SPI₂³ } SK_{User→E3}

At step 210, the User 104 decrypts these messages and stores the SPIs. At step 212, the User 104 combines the responses from the three other entities E₁, E₂, E₃ and constructs a table T of the form:

| | E₁ | E₂ | E₃ |
|---|---|---|---|
| E₁ | | SPI₂¹ | SPI₃¹ |
| E₂ | SPI₁² | | SPI₃² |
| E₃ | SPI₁³ | SPI₂³ | |

Next, at step 214 in the commit sub-phase of the second phase, the User 104 generates a group encryption key (grp-enc-key) and a group authentication key (grp-digest-key) and at step 216 sends the following SPI tuples and the group keys to the three entities E₁, E₂, E₃:
User->E1 : { (SPI₁², SPI₂¹, E₂), (SPI₁³, SPI₃¹, E₃) , grp-enc-key, grp-digest-key}SK_{User→E1};
User→E₂: {(SPI₂¹, SPI₁², E₁), (SPI₂³, SPI₃², E₃), grp-enc-key, grp-digest-key}SK_{User→E2};
User→E₃: { (SPI₃¹, SPI₁³, E₁) , (SPI₃², SPI₂³, E₂), grp-enc-key, grp-digest-key}SK_{User→E3}.

As may be seen from table T, the tuples sent at step 216 may also be represented as:
User->E₁: { (T[2] [1], T[1] [2], E₂), (T[3] [1], T[1] [3], E₃) };
User→E₂: { (T[1] [2], T[2] [1], E₁), (T[3] [2], T[2] [3], E₃) };
User->E₃: { (T[1] [3], T[3] [1], E₁), (T[2] [3], T[3] [2], E₂) }.

Upon receiving the respective tuples, each of the entities E₁, E₂, E₃ initiates Security Association creation at the IPSec level with the others of these entities (step 218), and then sends a success or failure message to the User 104 (step 220) to indicate whether or not the Security Associations were successfully created:
E₁ → User: Success or Failure
E₂ → User: Success or Failure
E₃ → User: Success or Failure

The protocol is successful if a Success message is received by the User 104 from each of the entities E₁, E₂, E₃, and hence that Security Associations have been created between the other entities E₁, E₂, E₃. These Security Associations (SAs) are indicated schematically in FIG. 1 at 110a (between entities E₁ and E₂), 110b (between entities E₁ and E₃), and 110c (between entities E₂ and E₃).

This protocol thus uses the trust between the User 104 and the set of other computing entities E₁, E₂, E₃. The other entities E₁, E₂, E₃ need not trust each other, and validate their trust of the User 104 by means of authentication. Once another entity is convinced of the identity of a particular User 104, it may decide to offer services to the User 104. Establishment of the SAs can regarded as part of offering that service to the User. It should be noted that the User sends to each other entity, in the course of the protocol, the IP addresses of the other entities with whom SAs should be set up. The protocol messages cannot be tampered with without detection as they are sent over the secure channel established in the first phase, and each entity establishes SAs with only those entities that were referenced by the User in the respective protocol messages. As the other computing entities establish IPSec SAs, each other entity can establish valid secure channels with only the desired entities and not with malicious or otherwise unauthorized machines.

The protocol of this embodiment thus establishes a plurality of secure associations between any two entities. The SPIs specify the User 104, so the use of an SPI for outgoing communication to a particular other entity connotes that the entity (or process) in question is trying to communicate with the peer on behalf of the User that has been allotted that SPI by that peer. The same applies to network communication within the host (in this embodiment by means of AF INET sockets). This is why, for any particular User 104, each other entity dedicates n SPIs: one for network communication with processes running within the host, and (n-1) for communication with the (n-1) peer hosts.

In addition, according to this embodiment each other entity/host maintains a dummy secure channel with its peers. That channel is for communication that is not intended to be on behalf of Users, such as a telnet client communicating with a telnet server (telnetd).

As mentioned above, according to this embodiment the User 104 generates the group encryption and the group authentication keys (grp-enc-key and grp-digest-key). The User 104 - itself a software application - includes routines for generating strong keys. (The User should be smart enough to generate strong rather than weak keys, as weak keys- though possibly acceptable in some applications - will lead to far less secure delegation.) The validity of the keys is fixed after which the User 104 generates a fresh set of keys. If the User 104 intends to go offline after establishing the secure associations between the other entities, the User 104 delegates the generation of the group encryption and group authentication keys to the most trusted of those other entities (such as the primary other entity with which the User 104 is registered).

The key-management protocol of this embodiment does not satisfy the property of Single Sign-on, as the User 104 undergoes authentication with each of the other entities involved in the service delivery.

The key-management protocol 200 also includes an auxiliary protocol for allowing additional other entities to join the group securely even after the initial SAs have been established between an original set of other entities.

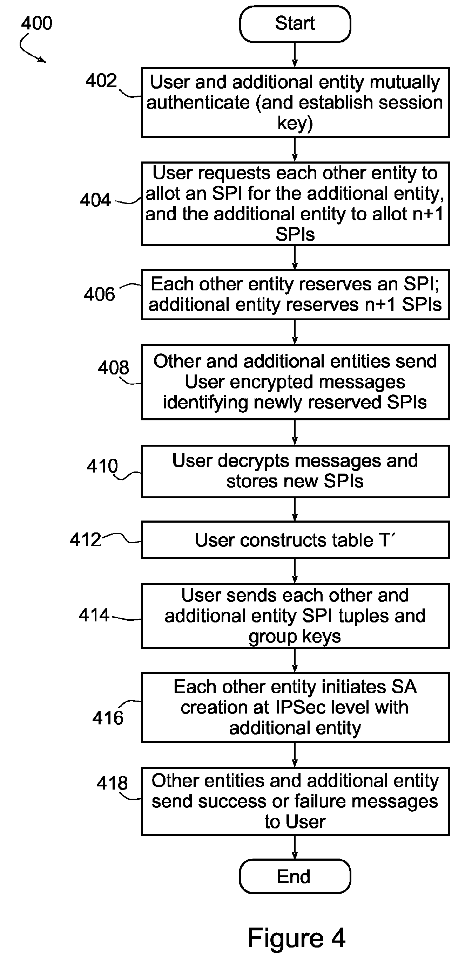

FIG. 3 is a schematic view of an extended computer network 300 comprising the computer network of FIG. 1 and a further host computer 302. This further host computer 302 is loaded with and running a software entity E₄, which - in this example - is required by the User 104 at some time after the User 104 has delegated authority to the group of software entities E₁, E₂ and E₃. Thus, the User 104 will attempt to delegate authority to entity E₄ so that entity E₄ will be added securely to the existing group of entities E₁, E₂ and E₃ . This auxiliary protocol is illustrated at 400 in FIG. 4 as a flow diagram.

Referring to FIG. 4, when User 104 must access software entity E₄, having already established SAs between n = 3 other entities (viz. E₁, E₂, E₃), the User 104 initiates at step 402 mutual authentication with entity E₄; this includes establishing a further session share-key SK_{User→E4}: User → E₄.

Next, at step 404 the User 104 sends to each other entity E₁, E₂, E₃ a signed and encrypted request to allot an additional SPI (for additional entity E₄), and the additional entity E₄ a signed and encrypted request to allot n + 1 = 4 SPIs:
User→E₁: {ALLOT 1 SPI, (E₄) } SK_{User→E1}
User→E₂: {ALLOT 1 SPI, (E₄) } SK_{User→E2}
User→E₃: {ALLOT 1 SPI, (E₄) } SK_{User→E3}
User→E₄: {ALLOT 4 SPI, (E₁, E₂, E₃) } SK_{User→E4}.

At step 406, each of the other entities E₁, E₂, E₃ responds by reserving the extra SPI and the additional entity E₄ responds by reserving the n + 1 SPIs; entities E₁, E₂, E₃ and E₄ then send the User 104 encrypted messages identifying the newly reserved SPIs (step 408):
E₁->User : {SPI₄¹ } SK_{User→E1}
E₂→User : {SPI₄² } SK_{User→E2}
E₃→User : {SPI₄³ } SK_{User→E3}
E₄→User : { SPI₁⁴, SPI₂⁴, SPI₃⁴ } SK_{User→E4}.

At step 410, the User 104 decrypts these messages and stores the new SPIs. At step 412, the User 104 combines the responses from the entities E₁, E₂, E₃ and E₄ and constructs a new table T or T' of the form:

| | E₁ | E₂ | E₃ | E₄ |
|---|---|---|---|---|
| E₁ | | SPI₂¹ | SPI₃¹ | SPI₄¹ |
| E₂ | SPI₁² | | SPI₃² | SPI₄² |
| E₃ | SPI₁³ | SPI₂³ | | SPI₄³ |
| E₄ | SPI₁⁴ | SPI₂⁴ | SPI₃⁴ | |

Next, at step 414 the User 104 sends the following SPI tuples and the group keys to the entities E₁, E₂, E₃ and E₄:
User→E₁: { (SPI₁², SPI₂¹, E₂), (SPI₁³, SPI₃¹, E₃), (SPI₁⁴, SPI₄¹, E₄), grp-enc-key, grp-digest-key}SK_{User→E1};
User→E₂: { (SPI₂¹, SPI₁², E₁), (SPI₂³, SPI₃², E₃), (SPI₂⁴, SPI₄², E₄), grp-enc-key, grp-digest-key}SK_{User→E2};
User→E₃: { (SPI₃¹, SPI₁³, E₁), (SPI₃², SPI₂³, E₂), (SPI₃⁴, SPI₄³, E₄), grp-enc-key, grp-digest-key}SK_{User→E3};
User→E₄: { (SPI₄¹, SPI₁⁴, E₁), (SPI₄², SPI₂⁴, E₂), (SPI₄³, SPI₃⁴, E₃), grp-enc-key, grp-digest-key}SK_{User→E4}.

As will be appreciated by those in the art, this step may be somewhat abbreviated since some of these tuples are already in the possession of the entities E₁, E₂ and E₃, as are grp-enc-key and grp-digest-key. Hence, an alternative to step 414 is:
User->E₁: { (SPI₁⁴, SPI₄¹, E₄) }SK_{User→E1};
User→E₂: { (SPI₂⁴, SPI₄², E₄) } SK_{User→E2};
User→E₃: { (SPI₃⁴, SPI₄³, E₄) }SK_{User→E3};
User→E₄: { (SPI₄¹, SPI₁⁴, E₁) , (SPI₄², SPI₂⁴, E₂) , (SPI₄³, SPI₃⁴, E₃) , grp-enc-key, grp-digest-key}SK_{User→E4}.

As may be seen from new table T (or T'), the tuples sent at step 414 may also be represented as:
User->E₁: { (T[2] [1], T[1] [2], E₂), (T[3] [1], T[1] [3], E₃), (T[4] [1], T[1] [4], E₄) };
User→E₂: { (T[1] [2], T[2] [1], E₁), (T[3] [2], T[2] [3], E₃), (T[4] [2], T[2] [4], E₄) };
User->E₃: { (T[1] [3], T[3] [1], E₁), (T[2] [3], T[3] [2], E₂), (T[4] [3], T[3] [4], E₄) };
User->E₄: {(T[1] [4], T[4] [1], E₁), (T[2] [4], T[4] [2], E₂), (T[3] [4], T[4] [3], E₃) }.

Upon receiving the respective tuples, each of the entities E₁, E₂, E₃ initiates Security Association creation at the IPSec level with the additional entity E₄ (step 416), and all the entities then send success or failure messages to the User 104 (step 418) to indicate whether or not these Security Associations were successfully created:
E₁ → User: Success or Failure
E₂ → User: Success or Failure
E₃ → User: Success or Failure
E₄ → User: Success or Failure

The protocol 400 is successful if a Success message is received by the User 104 from each of the entities E₁, E₂, E₃, E₄, and hence that Security Associations have been created between the entities E₁, E₂, E₃, E₄. These new Security Associations (SAs) are indicated schematically in FIG. 3 at 304a (between entities E₁ and E₄), 304b (between entities E₂ and E₄), and 304c (between entities E₃ and E₄). In view of the earlier creation of SAs 110a (between entities E₁ and E₂), 110b (between entities E₁ and E₃), and 110c (between entities E₂ and E₃), SAs have therefore been created between each pair of entities E₁, E₂, E₃, E₄.

The delegation protocol of this embodiment has many possible applications. For example, one may consider a person at a public place (such as a wireless Hotspot) with wireless access to the local Hotspot server through his or her laptop. The Hotspot server allows this person to connect to the Internet, and allows any authorized user to download a limited amount of data from a remote server onto the local limited secondary storage (these limitations being for reasons of speed). In order to communicate securely with the remote server, a secure channel has to be established from the local Hotspot server to the remote server. The secure channel should have the following characteristics:
1) The server process on the remote server should know on whose behalf the Hotspot server has sent the request for the data;
2) The server process should be able to authorize the request; and
3) The client process on the local Hotspot server should submit the job with the relevant user credentials.

The application developer designs his or her own protocol to achieve the above. Briefly, this protocol should be designed so that:
1) The user's actual credentials on the remote server are not disclosed to the local Hotspot server; and
2) It establishes the user's authenticity with the remote server and obtains some token for submission to the Hotspot server. Both servers then perform data transformations on the requests and responses using this token in an agreed fashion. For example, both the servers can mutually authenticate themselves using the token as a shared key and establish a secure channel.

These requirements apply to applications offering interdomain secure collaboration. However, the approach is made more generic if the protocol of this embodiment for establishing secure associations among collaborating entities is employed and mechanisms are provided so that processes on the entities can take advantage of the secure collaboration without being involved in the establishment of the secure collaboration.

In addition, the number of auth-related protocol exchanges is reduced in those cases where the user sets up trust between any two entities for multiple applications. Once an SA has been established between any two entities, all applications can exploit that SA.

In greater detail, this protocol is designed by the application developer as follows.

### 1) Key Establishment

In this embodiment, key establishment is implemented in the application layer and the HTTP protocol is used to transport messages between the User 104 and the other entities. Each of the other entities runs a daemon, referred to as the auth-daemon, that manages the state of the SAs, user-details, etc. The User 104 obtains the set of other entities that are needed for authentication in an out-of-band fashion. The User 104 initiates the protocol (as in the first phase of the protocol as described above) by performing mutual authentication with all the other entities. The second phase of the protocol is then executed also as described above.

### 2) SA Establishment

Once the protocol message exchanges have taken place, the other entities are in a position to establish the IPSec secure association. These secure associations are established in the form of IPSec ESP (Encapsulated Security Payload) tunnels. A tunnel is created to each peer from any given peer, and vice versa. The routing table is updated so that the outgoing packets to a given peer are always routed through the tunnel created for that peer. The tunneling protocol (IPSEC-ESP) takes care of signing/encrypting packets passing through it.

### 3) SA Selection

It should be noted that there can be multiple SAs between any two entities. Thus, a mechanism is provided by which an entity can specify which SA should be selected when that entity is communicating with another such entity. By default, the dummy SA is used as the outgoing SA; this is the first SA in the list of SAs established as described above. If a process on a given entity wishes to communicate with another entity on behalf of the User 104 (that is, exploit a particular SA), that process can do so with some modifications to the OS kernel's network stack and ioctl commands (described below).

### 4) Kernel support

As control is to be given to user-level applications to choose (if desired) the SA to a local/remote process, support from the kernel is required in order to maintain and propagate the SPI values from the application to the lower layers of the network stack, and vice-versa. Application level processes can issue ioctl commands to get/set the SPI associated with a socket file descriptor that they own.

For example, in the LINUX (a trade mark of Linus Torvalds) operating system, this can be accomplished by making modifications to the two structures struct sk_buff and struct sock. These modifications are described and explained as follows.

The IPSec tunnel implementation registers with the kernel, a protocol handler, for handling packets that have the protocol-field value as IPSEC_ESP. Thus, if an incoming packet is meant for local processing and the packet has the protocol-field value as IPSEC_ESP, it is handed over to the IPSEC ESP protocol handler (as sk_buff, the data field of which is the encapsulated packet). The handler then decapsulates/decrypts/authenticates the packet and hands it to the IP layer as sk buff (the data field of which is a pure IP packet). The sk buff structure is thus modified to have an additional field called spi. The IPSEC ESP protocol handler sets this field's value to the SPI value embedded in the incoming packet (as per IPSec ESP protocol packet format).

Every incoming TCP/UDP packet that should be processed locally (as opposed to being routed to another entity) must have an owner process waiting for data or connection (as in case of TCP). There is a one-to-one correspondence between an application-level socket file descriptor and struct sock in the kernel. The kernel looks up the sock associated with an incoming packet based on TCP/UDP IP-addresses and ports (as relevant) encoded in the packet.

If this look-up is successful, a pointer to struct sock is obtained, the spi_incoming field of which is set to the value of the respective sk_buff's spi field. Thus, struct sock is modified to have two additional fields: spi_incoming and spi_outgoing. (The use of spi_outgoing is explained below.)

The packet travels up the stack and finally reaches the intended application-process. Application level processes can issue ioctl command SIOCGSPI to obtain the SPI associated with a socket; this is the value of spi_incoming associated with the corresponding struct sock. (Two ioctl commands have been introduced to set/get SPI associated with struct sock.)

Similarly, an application can determine which SPI the IPSEC_ESP protocol handler should use for outgoing packets to a particular entity. The relevant ioctl command is SIOCSSPI; it sets the field spi outgoing in struct sock to the value passed (as another argument to the ioctl command). During the journey of the packet downwards, the spi_outgoing field value of struct sock is used to set the spi field value of the associated struct sk_buff. This is done at multiple places; for example, one of the functions where this is done is ip_build_xmit. Routing is done for the packet at the IP layer. If the packet is destined to pass through one of the IPSEC_ESP tunnels created earlier, the IPSEC_ESP protocol handler chooses the SA for the outgoing packet based on the spi field value of struct sk_buff and the destination IP address.

### Application programming

As discussed above, applications can issue an ioctl command to obtain the SPI associated with a socket. The user-name associated with the SPI can then be obtained by invoking the auth-daemon. The auth-daemon maintains relevant mappings between user-names (and associated information), peers, and, SPIs. Access-control can thus be enforced based on the user on whose behalf a process is accessing the application in question.

The applications can issue an ioctl command to choose the SPI that should be used to select the SA to a particular entity. The auth-daemon can be queried to obtain the SPI of a {user-name, peer} tuple. A few simple APIs are provided that serve as a wrapper to the underlying details of the actual communication with the auth-daemon for doing the above tasks. An example of an API is as follows:

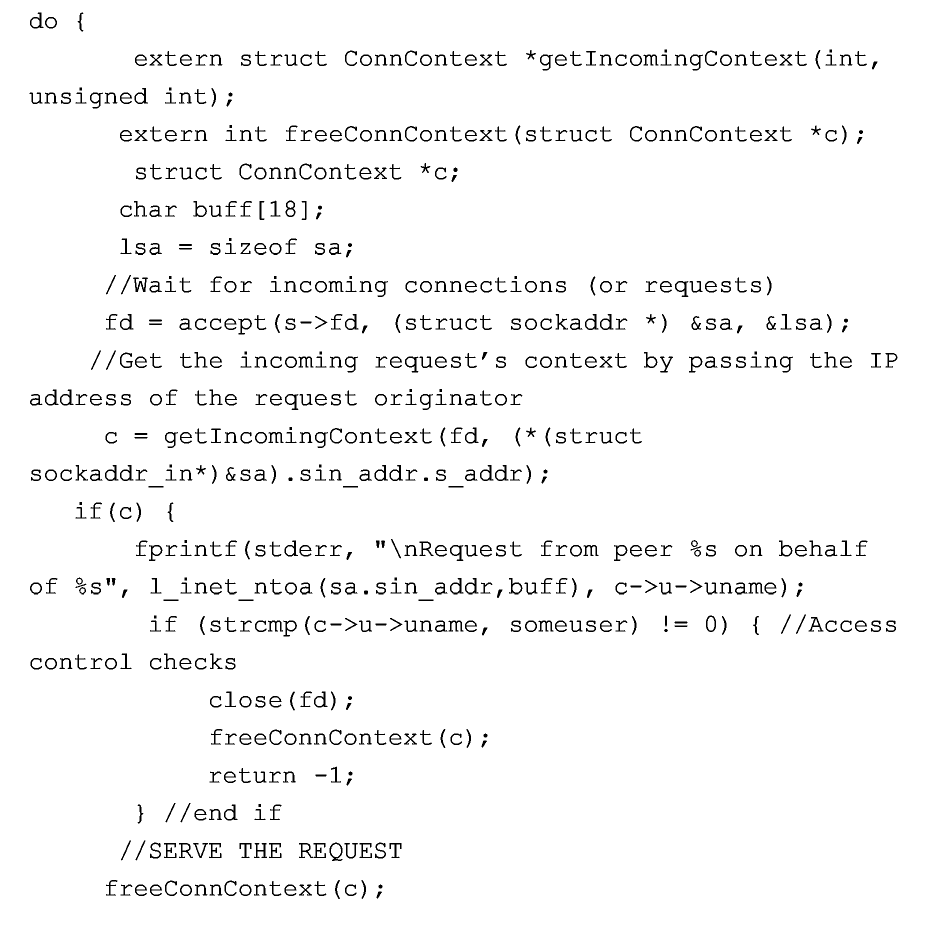

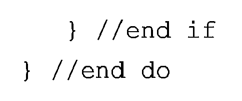

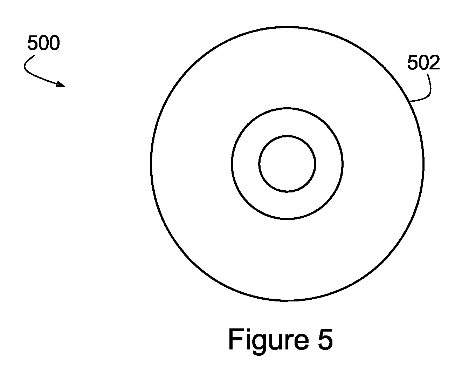

FIG. 5 is a schematic view of a data storage medium 500 according to another embodiment. The data storage medium 500 is in the form of a CD-ROM 502 that contains program instructions for facilitating authority delegation in the manner described by reference to FIGS. 2 and FIG. 4. It will be understood that, in this embodiment, the particular type of data storage medium may be selected according to need or other requirements. For example, instead of CD-ROM 502 the data storage medium 500 could be in the form of a magnetic medium, but essentially any data storage medium will suffice. Indeed, the user need not be aware of which type of data storage medium is used, as the actual data storage medium could be located and accessed remotely.

The foregoing description of the exemplary embodiments is provided to enable any person skilled in the art to make or use the present invention. While the invention has been described with respect to particular illustrated embodiments, various modifications to these embodiments will readily be apparent to those skilled in the art, and the generic principles defined herein may be applied to other embodiments without departing from the spirit or scope of the invention. It is therefore desired that the present embodiments be considered in all respects as illustrative and not restrictive. Accordingly, the present invention is not intended to be limited to the embodiments described above but is to be accorded the widest scope consistent with the principles and novel features disclosed herein.

## Claims

1. A key-management method for delegating authority in a computer environment, comprising:
performing mutual authentication between a first computing entity and a plurality of other computing entities; and
establishing pair-wise secure associations between the other entities.

2. A method as claimed in claim 1, further comprising performing mutual authentication between said first computing entity and at least one further other computing entity and establishing pair-wise secure associations between said further other computing entity and said other entities after said establishing of said pair-wise secure associations between said other entities.

3. A method as claimed in claim 1, wherein said first computing entity is one of a plurality of user computing devices and said method includes establishing a corresponding plurality of sets of pair-wise secure associations between the other entities.

4. A method as claimed in claim 1, wherein said performing of said mutual authentication is by means of shared-keys.

5. A method as claimed in claim 4, further comprising said first computing entity generating group encryption and group authentication keys.

6. A method as claimed in claim 1, further comprising employing the IP security protocol in said performing of said mutual authentication between said first computing entity and said other computing entities, in said establishing of said pair-wise secure associations between said other entities, or in both said performing of said mutual authentication between said first computing entity and said other computing entities and said establishing of said pair-wise secure associations between said other entities.

7. A method as claimed in claim 1, wherein said secure associations comprise IP security protocol Security Associations.

8. A method for delegating authority from a first computing entity to a plurality of other computing entities, comprising:
performing mutual authentication between said first computing entity and said other computing entities; and
establishing pair-wise secure associations between the other entities.

9. An authority delegation system for delegating authority from a first computing entity to a plurality of other computing entities, comprising:
program instructions for responding to a request from said first computing entity to employ at least one service provided by said other computing entities by:
effecting mutual authentication between a first computing entity and a plurality of other computing entities; and
establishing pair-wise secure associations between the other entities.

10. A key management system for managing keys in a computing environment comprising a first computing entity and a plurality of other computing entities, the system comprising:
program instructions for:
effecting mutual authentication between a first computing entity and a plurality of other computing entities; and
establishing pair-wise secure associations between the other entities.

11. A data storage medium containing program instructions for delegating authority in a computing environment from a first computing entity to a plurality of other computing entities by:
performing mutual authentication between a first computing entity and a plurality of other computing entities; and
establishing pair-wise secure associations between the other entities.
